# EUROPEAN PATENT APPLICATION

(11) **EP 4 554 297 A1**
(43) Date of publication of application: **14.05.2025**
(21) Application number: 23834520.1
(22) Date of filing: 18.05.2023
(51) Int. Cl.: H04W 72/00

(54) **RESOURCE ALLOCATION METHOD AND APPARATUS, INFORMATION CONFIGURATION METHOD AND APPARATUS, TERMINAL DEVICE, AND NETWORK DEVICE**

(30) Priority: 08.07.2022 CN 202210806196
(71) Applicant: Datang Mobile Communications Equipment Co., Ltd., Beijing 100085 (CN)
(72) Inventor: ZHAO, Yali, Beijing 100085 (CN); CHEN, Li, Beijing 100085 (CN)
(74) Representative: dompatent von Kreisler Selting Werner - Partnerschaft von Patent- und Rechtsanwälten mbB
(86) International application number: PCT/CN2023/095009
(87) International publication number: WO 2024/007746

(57) **Abstract**

A resource allocation method, an information configuration method, an apparatus, a terminal device and a network device are provided, which relates to the field of communication technology. The method performed by the terminal equipment, includes: obtaining available resource; performing a first logical channel prioritization (LCP) procedure for the available resource; where the first LCP procedure includes: according to a descending order of a priority of each of packet data unit (PDU) sets having available data and allowed to use the available resource, allocating resources to the data to be transmitted of each PDU set.

## Description

### CROSS REFERENCE OF RELATED APPLICATION

The present disclosure claims a priority of Chinese patent disclosure No. 202210806196.8 filed on July 8, 2022, which is incorporated herein by reference in its entirety.

### TECHNICAL FIELD

The present disclosure relates to the field of communication technology, and in particular to a resource allocation method, an information configuration method, an apparatus, a terminal device and a network device.

### BACKGROUND

The fifth generation (5G) mobile communication technology system supports video services such as extended reality (eXtended Reality, XR) and cloud gaming. In view of the transmission characteristics of XR services, the high-level layer introduces the concept of Packet Data Unit (PDU) set (also called PDU set), and there is a certain correlation between PDUs in a PDU set.

The traditional uplink logical channel prioritization (LCP) procedure only considers the priority of the logical channel and the prioritized bit rate (PBR) of the logical channel. This method is not suitable for scheduling the PDU set of XR services.

### SUMMARY

The embodiments of the present disclosure provide a resource allocation method, an information configuration method, an apparatus, a terminal device and a network device to achieve the purpose of allocating resources for a PDU set.

In order to solve the above technical problems, a resource allocation method is provided in an embodiment of the present disclosure, performed a terminal device, including:
obtaining an available resource;
for the available resource, performing a first logical channel prioritization (LCP) procedure;
where the first LCP procedure includes: according to a descending order of a priority of each of packet data unit (PDU) sets having available data and allowed to use the available resource, allocating resources to the data to be transmitted of each PDU set.

Optionally, the method for obtaining the priority of the PDU set includes:
determining the priority of the PDU set according to a radio interface priority corresponding to the PDU sets; or
determining the priority of the PDU set according to a radio interface priority corresponding to the PDU set and a priority of a logical channel to which the PDU set belongs.

Optionally, the method for determining the radio interface priority corresponding to the PDU set includes one of the following:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

Optionally, the determining the priority of the PDU set according to the radio interface priority corresponding to the PDU set and the priority of the logical channel to which the PDU set belongs includes:
determining the priority of the PDU set, by taking a weighted sum of the radio interface priority corresponding to the PDU set and the priority of the logical channel to which the PDU set belongs.

Optionally, the method further includes:
obtaining a media access control MAC multiplexing rule;
the MAC multiplexing rule includes one of the following:
data of logical channels using different LCP procedures is not to be multiplexed into one MAC PDU;
data of logical channels using different LCP procedures is to be multiplexed into one MAC PDU;
where the LCP procedure includes at least one of the following:
   a first LCP procedure; or
   a second LCP procedure, including two rounds of resource allocation, where a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

Optionally, the method further includes:
receiving logical channel configuration information sent by a network device, and determining an LCP procedure adopted by the logical channel according to the logical channel configuration information; or
determining the LCP procedure used by the logical channel according to a service type carried by the logical channel.

Optionally, the determining the LCP procedure adopted by the logical channel according to the logical channel configuration information includes:
the LCP procedure indication information being optional in the logical channel configuration information; when the LCP procedure indication information exists in the logical channel configuration information, determining the LCP procedure adopted by the logical channel to be the first LCP procedure; or, when the LCP procedure indication information does not exist in the logical channel configuration information, determining the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determining the LCP procedure adopted by the logical channel to be the first LCP procedure; or, when the LCP procedure indication information exists in the logical channel configuration information and a value of the LCP procedure indication information is a second value, determining the LCP procedure adopted by the logical channel to be the second LCP procedure; or, when the LCP procedure indication information does not exist in the logical channel configuration information, determining the LCP procedure adopted by the logical channel to be the second LCP procedure; or
the LCP procedure indication information being mandatory in the logical channel configuration information; when a value of the LCP procedure indication information is a first value, determining the LCP procedure adopted by the logical channel to be the first LCP procedure; or, when a value of the LCP procedure indication information is a second value, determining the LCP procedure adopted by the logical channel to be the second LCP procedure.

Optionally, when the MAC multiplexing rule includes data of logical channels using different LCP procedures is not be multiplexed into one MAC PDU, the method further includes:
determining the LCP procedure corresponding to the available resource;
when the LCP procedure corresponding to the available resource is the first LCP procedure, according to the descending order of priority of each of the PDU sets having available data and allowed to use the available resource, allocating resources to the data to be transmitted of each PDU set.

Optionally, the determining the LCP corresponding to the available resource includes:
determining, according to the indication information carried in the available resource, the LCP procedure corresponding to the available resource; or
determining, according to the LCP procedure adopted by the first logical channel, the LCP procedure corresponding to the available resource, where the first logical channel is a logical channel with a highest priority in the first logical channel set for which the available resource are usable;
the indication information includes at least one of the following:
   a LCP procedure corresponding to the available resource;
   service information corresponding to the available resource; or
   logical channel identification information corresponding to the available resource.

Optionally, when the MAC multiplexing rule includes data of logical channels using different LCP procedures is to be multiplexed into one MAC PDU, the method further includes one of the following:
sorting the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
performing a first operation according to the priorities of the first LCP procedure and the second LCP procedure;
where the first operation includes:
   in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
   in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
   in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

An information configuration method is further provided , performed by a network device, including:
sending logical channel configuration information to a terminal device, where the logical channel configuration information is configured to assist the terminal device in determining a logical channel prioritization (LCP) procedure adopted by a logical channel;
where the LCP procedure includes at least one of the following:
   a first LCP procedure, where the first LCP procedure is: according to a descending order of a priority of each of packet data unit (PDU) sets having available data and allowed to use the available resource, allocating resources to the data to be transmitted of each PDU set; or
   a second LCP procedure, including two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

Optionally, the logical channel configuration information includes LCP procedure indication information.

Optionally, the method further includes:
sending available resource to the terminal device, where the available resource carry indication information;
the indication information includes at least one of the following:
   a LCP procedure corresponding to the available resource;
   service information corresponding to the available resource; or
   logical channel identification information corresponding to the available resource.

A terminal device is further provided in the embodiment of the present disclosure, including a memory, a transceiver, and a processor, where
the memory is configured to store a computer program; the transceiver is configured to send and receive data under a control of the processor; and the processor is configured to read the computer program in the memory to perform:
obtaining an available resource;
for the available resource, performing a first logical channel prioritization (LCP) procedure;
where the first LCP procedure includes: according to a descending order of a priority of each of packet data unit (PDU) sets having available data and allowed to use the available resource, allocating resources to the data to be transmitted of each PDU set.

Optionally, the processor is further configured to read the computer program in the memory to perform:
determining the priority of the PDU set according to a radio interface priority corresponding to the PDU sets; or
determining the priority of the PDU set according to a radio interface priority corresponding to the PDU set and a priority of a logical channel to which the PDU set belongs.

Optionally, the processor is further configured to read the computer program in the memory to perform:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

Optionally, the processor is further configured to read the computer program in the memory to perform:
determining the priority of the PDU set, by taking a weighted sum of the radio interface priority corresponding to the PDU set and the priority of the logical channel to which the PDU set belongs.

Optionally, the processor is further configured to read the computer program in the memory to perform:
obtaining a media access control MAC multiplexing rule;
the MAC multiplexing rule includes one of the following:
data of logical channels using different LCP procedures is not to be multiplexed into one MAC PDU;
data of logical channels using different LCP procedures is to be multiplexed into one MAC PDU;
where the LCP procedure includes at least one of the following:
   a first LCP procedure; or
   a second LCP procedure, including two rounds of resource allocation, where a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

Optionally, the processor is further configured to read the computer program in the memory to perform:
receiving logical channel configuration information sent by a network device through the transceiver, and determining an LCP procedure adopted by the logical channel according to the logical channel configuration information; or
determining the LCP procedure used by the logical channel according to a service type carried by the logical channel.

Optionally, the processor is further configured to read the computer program in the memory to perform:
the LCP procedure indication information being optional in the logical channel configuration information; when the LCP procedure indication information exists in the logical channel configuration information, determining the LCP procedure adopted by the logical channel to be the first LCP procedure; or, when the LCP procedure indication information does not exist in the logical channel configuration information, determining the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determining the LCP procedure adopted by the logical channel to be the first LCP procedure; or, when the LCP procedure indication information exists in the logical channel configuration information and a value of the LCP procedure indication information is a second value, determining the LCP procedure adopted by the logical channel to be the second LCP procedure; or, when the LCP procedure indication information does not exist in the logical channel configuration information, determining the LCP procedure adopted by the logical channel to be the second LCP procedure; or
the LCP procedure indication information being mandatory in the logical channel configuration information; when a value of the LCP procedure indication information is a first value, determining the LCP procedure adopted by the logical channel to be the first LCP procedure; or, when a value of the LCP procedure indication information is a second value, determining the LCP procedure adopted by the logical channel to be the second LCP procedure.

Optionally, when the MAC multiplexing rule includes data of logical channels using different LCP procedures is not be multiplexed into one MAC PDU, the processor is further configured to read the computer program in the memory to perform:
determining the LCP procedure corresponding to the available resource;
when the LCP procedure corresponding to the available resource is the first LCP procedure, according to the descending order of priority of each of the PDU sets having available data and allowed to use the available resource, allocating resources to the data to be transmitted of each PDU set.

Optionally, the processor is further configured to read the computer program in the memory to perform:
determining, according to the indication information carried in the available resource, the LCP procedure corresponding to the available resource; or
determining, according to the LCP procedure adopted by the first logical channel, the LCP procedure corresponding to the available resource, where the first logical channel is a logical channel with a highest priority in the first logical channel set for which the available resource are usable;
the indication information includes at least one of the following:
   a LCP procedure corresponding to the available resource;
   service information corresponding to the available resource; or
   logical channel identification information corresponding to the available resource.

Optionally, when the MAC multiplexing rule includes data of logical channels using different LCP procedures is to be multiplexed into one MAC PDU, the processor is further configured to read the computer program in the memory to perform one of the following:
sorting the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
performing a first operation according to the priorities of the first LCP procedure and the second LCP procedure;
where the first operation includes:
   in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
   in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
   in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

A network device is further provided in the embodiment of the present disclsoure, including a memory, a transceiver, and a processor:
the memory is configured to store a computer program; the transceiver is configured to send and receive data under a control of the processor; and the processor is configured to read the computer program in the memory to perform:
sending logical channel configuration information to a terminal device through the transceiver, where the logical channel configuration information is configured to assist the terminal device in determining a logical channel prioritization (LCP) procedure adopted by a logical channel;
where the LCP procedure includes at least one of the following:
   a first LCP procedure, where the first LCP procedure is: according to a descending order of a priority of each of packet data unit (PDU) sets having available data and allowed to use the available resource, allocating resources to the data to be transmitted of each PDU set; or
   a second LCP procedure, including two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

Optionally, the logical channel configuration information includes LCP procedure indication information.

Optionally, the processor is further configured to read the computer program in the memory to perform:
sending available resource to the terminal device through the transceiver, where the available resource carry indication information;
the indication information includes at least one of the following:
   a LCP procedure corresponding to the available resource;
   service information corresponding to the available resource; or
   logical channel identification information corresponding to the available resource.

A resource allocation apparatus is further provided in the embodiment of the present disclosure, applied to a terminal device, including:
a first obtaining unit, configured to obtain an available resource;
a first performing unit, configured to, for the available resource, perform a first logical channel prioritization (LCP) procedure;
where the first LCP procedure includes: according to a descending order of a priority of each of packet data unit (PDU) sets having available data and allowed to use the available resource, allocating resources to the data to be transmitted of each PDU set.

Optionally, the method for obtaining the priority of the PDU set includes:
determining the priority of the PDU set according to a radio interface priority corresponding to the PDU sets; or
determining the priority of the PDU set according to a radio interface priority corresponding to the PDU set and a priority of a logical channel to which the PDU set belongs.

Optionally, the method for determining the radio interface priority corresponding to the PDU set includes one of the following:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

Optionally, the determining the priority of the PDU set according to the radio interface priority corresponding to the PDU set and the priority of the logical channel to which the PDU set belongs includes:
determining the priority of the PDU set, by taking a weighted sum of the radio interface priority corresponding to the PDU set and the priority of the logical channel to which the PDU set belongs.

Optionally, the resource allocation apparatus further includes:
a second obtaining unit, configured to obtain a media access control MAC multiplexing rule;
the MAC multiplexing rule includes one of the following:
   data of logical channels using different LCP procedures is not to be multiplexed into one MAC PDU;
   data of logical channels using different LCP procedures is to be multiplexed into one MAC PDU;
   where the LCP procedure includes at least one of the following:
      a first LCP procedure; or
      a second LCP procedure, including two rounds of resource allocation, where a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

Optionally, the resource allocation apparatus further includes:
a first determining unit, configured to receive logical channel configuration information sent by a network device, and determining an LCP procedure adopted by the logical channel according to the logical channel configuration information; or
a second determining unit, configured to determine the LCP procedure used by the logical channel according to a service type carried by the logical channel.

Optionally, the first determining unit is configured to:
the LCP procedure indication information being optional in the logical channel configuration information; when the LCP procedure indication information exists in the logical channel configuration information, determine the LCP procedure adopted by the logical channel to be the first LCP procedure; or, when the LCP procedure indication information does not exist in the logical channel configuration information, determine the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determine the LCP procedure adopted by the logical channel to be the first LCP procedure; or, when the LCP procedure indication information exists in the logical channel configuration information and a value of the LCP procedure indication information is a second value, determine the LCP procedure adopted by the logical channel to be the second LCP procedure; or, when the LCP procedure indication information does not exist in the logical channel configuration information, determine the LCP procedure adopted by the logical channel to be the second LCP procedure; or
the LCP procedure indication information being mandatory in the logical channel configuration information; when a value of the LCP procedure indication information is a first value, determine the LCP procedure adopted by the logical channel to be the first LCP procedure; or, when a value of the LCP procedure indication information is a second value, determine the LCP procedure adopted by the logical channel to be the second LCP procedure.

Optionally, when the MAC multiplexing rule includes data of logical channels using different LCP procedures is not be multiplexed into one MAC PDU, the resource allocation apparatus further includes:
a third determining unit, configured to determine the LCP procedure corresponding to the available resource;
a first allocating unit, configured to when the LCP procedure corresponding to the available resource is the first LCP procedure, according to the descending order of priority of each of the PDU sets having available data and allowed to use the available resource, allocate resources to the data to be transmitted of each PDU set.

Optionally, the third determining unit is configured to:
determine, according to the indication information carried in the available resource, the LCP procedure corresponding to the available resource; or
determine, according to the LCP procedure adopted by the first logical channel, the LCP procedure corresponding to the available resource, where the first logical channel is a logical channel with a highest priority in the first logical channel set for which the available resource are usable;
the indication information includes at least one of the following:
   a LCP procedure corresponding to the available resource;
   service information corresponding to the available resource; or
   logical channel identification information corresponding to the available resource.

Optionally, when the MAC multiplexing rule includes data of logical channels using different LCP procedures is to be multiplexed into one MAC PDU, the resource allocation apparatus further includes one of the following:
a second allocating unit, configured to sort the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
a second performing unit, configured to perform a first operation according to the priorities of the first LCP procedure and the second LCP procedure;
where the first operation includes:
   in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
   in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
   in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

An information configuration apparatus is further provided in the embodiment of the present disclosure, applied to a network device, including:
a first sending unit, configured to send logical channel configuration information to a terminal device, where the logical channel configuration information is configured to assist the terminal device in determining a logical channel prioritization (LCP) procedure adopted by a logical channel;
where the LCP procedure includes at least one of the following:
   a first LCP procedure, where the first LCP procedure is: according to a descending order of a priority of each of packet data unit (PDU) sets having available data and allowed to use the available resource, allocating resources to the data to be transmitted of each PDU set; or
   a second LCP procedure, including two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

Optionally, the logical channel configuration information includes LCP procedure indication information.

Optionally, he information configuration apparatus further includes:
a second sending unit, configured to sending available resource to the terminal device, where the available resource carry indication information;
the indication information includes at least one of the following:
   a LCP procedure corresponding to the available resource;
   service information corresponding to the available resource; or
   logical channel identification information corresponding to the available resource.

A processor-readable storage medium, storing a computer program, where the computer program is configured to enable the processor to perform the method hereinabove.

According to the present disclosure:
the above scheme allocates resources for the data to be transmitted for each PDU set based on the descending order of priority of each PDU set in the packet data unit (PDU) set having available data and allowed to use the available resource, thereby achieving the purpose of resource allocation based on PDU sets.

### BRIEF DESCRIPTION OF THE DRAWINGS

In order to more clearly illustrate the technical solutions in the embodiments of the present disclosure or related technologies, the drawings required for use in the embodiments or related technical descriptions will be briefly introduced below. Obviously, the drawings described below are only some embodiments recorded in the present disclosure. For ordinary technicians in this field, other drawings can be obtained based on these drawings without paying creative labor.
FIG. 1 is a structural diagram of a network system applicable to an embodiment of the present disclosure;
FIG.2 is a schematic view of the division of PDU;
FIG.3 is a schematic view of a flow chart of a resource allocation method applied to a terminal device according to an embodiment of the present disclosure;
FIG.4 is a schematic view of a flow chart of an information configuration method applied to a network device according to an embodiment of the present disclosure;
FIG.5 is a schematic view of units of a resource allocation apparatus according to an embodiment of the present disclosure;
FIG.6 is a structural view of a terminal device according to an embodiment of the present disclosure;
FIG.7 is a schematic view of units of an information configuration apparatus according to an embodiment of the present disclosure; and
FIG.8 is a structural view of a network device according to an embodiment of the present disclosure.

### DETAILED DESCRIPTION

The following will be combined with the drawings in the embodiments of the present disclosure to clearly and completely describe the technical solutions in the embodiments of the present disclosure. Obviously, the described embodiments are part of the embodiments of the present disclosure, rather than all of the embodiments. Based on the embodiments in the present disclosure, all other embodiments obtained by ordinary technicians in this field without creative work are within the scope of protection of the present disclosure.

The terms "first" and "second" in the present disclosure are used to distinguish similar objects, and are not necessarily used to describe a specific order or sequence. It should be understood that the data used in this way can be interchanged where appropriate, so that the embodiments of the present disclosure described herein, for example, are implemented in a sequence other than those illustrated or described herein. In addition, the terms "including" and "having" and any variations thereof are intended to cover non- exclusive inclusions, for example, a process, method, system, product, or device that includes a series of steps or units is not necessarily limited to those steps or units clearly listed, but may include other steps or units that are not clearly listed or inherent to these processes, methods, products, or devices.

In the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship. In the embodiments of the present disclosure, the term "plurality" refers to two or more than two, and other quantifiers are similar.

In the embodiments of the present disclosure, words such as "exemplary" or "for example" are used to indicate examples, illustrations, or descriptions. Any embodiment or design described as "exemplary" or "for example" in the embodiments of the present disclosure should not be interpreted as being more preferred or more advantageous than other embodiments or designs. Specifically, the use of words such as "exemplary" or "for example" is intended to present related concepts in a specific way.

The following describes an embodiment of the present disclosure in conjunction with the accompanying drawings. The resource allocation, information configuration method, device, terminal device, and network device provided in the embodiment of the present disclosure can be applied to a wireless communication system. The wireless communication system can be a system using the fifth generation (5th Generation, 5G) mobile communication technology (hereinafter referred to as a 5G system). It can be understood by those skilled in the art that the 5G NR system is only an example and not a limitation.

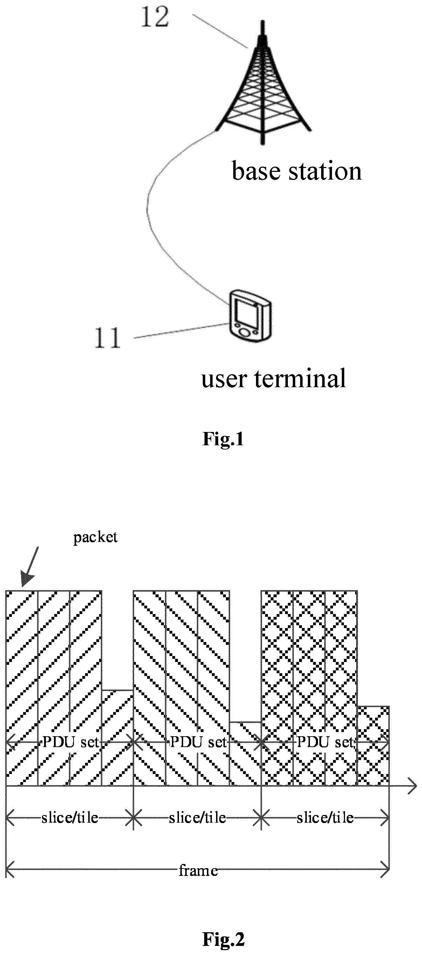

Referring to FIG. 1, FIG. 1 is a structural diagram of a network system applicable to an embodiment of the present disclosure. As shown in FIG. 1, the network system includes a user terminal 11 and a base station 12, where the user terminal 11 may be a user equipment (UE), for example, a mobile phone, a tablet computer (Tablet Personal Computer), a laptop computer (Laptop Computer), a personal digital assistant (PDA), a mobile Internet device (MID) or a wearable device (Wearable Device) and other terminal side devices. It should be noted that the specific type of the user terminal 11 is not limited in the embodiment of the present disclosure. The base station 12 may be a base station of 5G and later versions (for example, gNB, 5G NR NB), or a base station in other communication systems, or referred to as a node B. It should be noted that in the embodiment of the present disclosure, only a 5G base station is taken as an example, but the specific type of the base station 12 is not limited.

First, some concepts related to the embodiments of the present disclosure are described as follows.

### 1. Basic process of 5G radio interface data processing in related technologies

The 5G user plane radio interface protocol layer includes the Service Data Adaptation Protocol (SDAP) layer, the Packet Data Convergence Protocol (PDCP) layer, the Radio Link Control Protocol (RLC) layer, the Media Access Control (MAC) layer and the physical layer.

When a QoS flow arrives at SDAP, SDAP will perform the mapping of QoS flow to Data Radio Bearer (DRB), and form SDAP Protocol Data Unit (PDU) after mapping. SDAP PDU is PDCP SDU (Service Data Unit). The PDCP layer performs header compression, encryption and other operations on the PDCP SDU and then submits it to the RLC layer. The RLC layer then encapsulates the RLC PDU according to the MAC layer scheduling information and submits it to the MAC. The MAC encapsulates the received RLC PDU into MAC PDU and then submits it to the physical layer for transmission.

The principle for mapping SDAP to DRB for QoS flows is as follows: quality of service (QoS) attributes of data packets in a QoS flow are basically the same, a QoS flow can only be mapped to one DRB.

The transmission of DRB is based on MAC scheduling. In the traditional scheduling mode, the uplink scheduling resources allocated by the base station to the terminal are for one user. In order to ensure fairness between different services in the uplink transmission of the terminal and avoid starvation of some services, the Logical Channel Prioritization (LCP) procedure based on logical channel priority and prioritized bit rate (PBR) is currently used.

The LCP procedure based on logical channel priority and PBR is as follows:
When the terminal obtains an uplink resource grant (UL grant), it performs the first round of resource allocation according to the PBR for each logical channel having available data in descending order of logical channel priority;
If the first round of resource allocation ends and there are remaining resources, resources are allocated to each logical channel in descending order of priority of the logical channels currently requiring data transmission.

### 2. Basic Concepts of eXtended Reality (XR)

The 3GPP 5G system introduces XR services, which are divided into the following categories:
Augmented Reality (AR): seamless integration of the real world and the virtual world, half real and half fake;
Virtual Reality (VR): It uses devices to simulate a virtual world, which is completely fake;
Mixed Reality (MR): contains both real physical entities and virtual information.

XR services are modeled according to data frames. The same data frame can be divided into multiple packet data units (PDUs). As shown in Figure 2, in Figure 2, the definition of a PDU set is as follows: one or more PDUs corresponding to the same information unit constitute a PDU set. The PDUs in a PDU set are related and need to be processed uniformly.

The embodiments of the present disclosure provide a resource allocation and information configuration method, apparatus, terminal equipment and network equipment to achieve the purpose of allocating resources for a PDU set.

The method and the device are based on the same application concept. Since the method and the device solve the problem in a similar principle, the implementation of the device and the method can refer to each other, and the repeated parts will not be repeated.

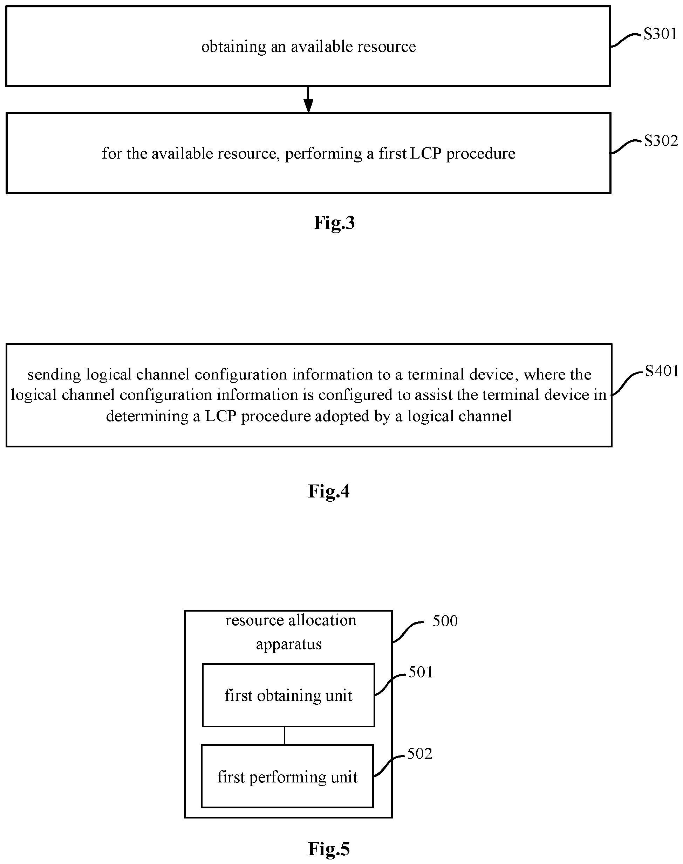

As shown in FIG.3, an embodiment of the present disclosure provides a resource allocation method, which is executed by a terminal device and includes:
Step S301: obtaining an available resource;
It should be noted that the available resource refers to a resource that can be used by the terminal device, for example, the available resource is an uplink authorization allocated by the network device to the terminal device, or the available resource is a direct communication interface resource of the terminal device.
Step S302: for the available resource, performing a first logical channel prioritization (LCP) procedure;
where the first LCP procedure includes: according to a descending order of a priority of each of packet data unit (PDU) sets having available data and allowed to use the available resource, allocating resources to the data to be transmitted of each PDU set.

It should be noted that the PDU set for allocating resources for data to be transmitted may be a set of all PDUs having available data that are allowed to use the available resource, or may be a partial PDU set among all PDUs having available data that are allowed to use the available resource (for example, the first few PDU sets with higher priorities).

It should be noted that the embodiment of the present disclosure can implement resource allocation based on the PDU set through the first LCP procedure, which is more conducive to the transmission of XR services.

Optionally, the method for obtaining the priority of the PDU set includes one of the following:
A11. determining the priority of the PDU set according to the radio interface priority corresponding to the PDU set;
It should be noted that in this case, when determining the priority of the PDU set, only the radio interface priority corresponding to the PDU set needs to be considered, that is, the radio interface priority corresponding to the PDU set can be directly determined as the priority of the PDU set.

Optionally, a method for determining the radio interface priority corresponding to the PDU set includes one of the following:
A111, determining a priority parameter in a quality of service (QoS) parameter of the PDU set as an radio interface priority corresponding to the PDU set;
It should be noted that each PDU set corresponds to a set of QoS parameters, and the QoS parameters include priority parameters. In this case, the priority parameters in the QoS parameters can be directly determined as the radio interface priority corresponding to the PDU set. For example, if the QoS parameter priority corresponding to the PDU set is 1, then the radio interface priority corresponding to the PDU set can be determined as 1.
A112, receiving the radio interface priority corresponding to the PDU set configured by the network device;

It should be noted that in this case, the network device will set the radio interface priority for each PDU set, and the terminal only needs to determine the radio interface priority corresponding to each PDU set based on the configuration of the network device.

A113. receiving a mapping relationship between a priority parameter in the QoS parameters of the PDU set configured by the network device and an radio interface priority, and determine the radio interface priority corresponding to the priority parameter in the QoS parameters of the PDU set according to the mapping relationship.

It should be noted that in this case, the network device will configure a comparison table between the priority parameters in the QoS parameters of a PDU set and the radio interface priority for the terminal device. Based on the comparison table, the terminal determines the radio interface priority to which the priority parameters in the QoS parameters of each PDU set are mapped, thereby obtaining the radio interface priority corresponding to each PDU set.

A12. determining the priority of the PDU set according to the radio interface priority corresponding to the PDU set and the priority of the logical channel to which the PDU set belongs;

It should be noted that, in this case, when determining the priority of the PDU set, it is necessary to consider not only the radio interface priority corresponding to the PDU set, but also the priority of the logical channel to which the PDU set belongs, and the priority of the PDU set is determined by combining the two together; optionally, the radio interface priority corresponding to the PDU set can be determined by any one of A111 to A113 mentioned above.

Optionally, in the embodiment of the present disclosure, a specific implementation method for determining the priority of the PDU set according to the radio interface priority corresponding to the PDU set and the priority of the logical channel to which the PDU set belongs is:
The priority of the PDU set is determined by taking a weighted sum of the radio interface priority corresponding to the PDU set and the priority of the logical channel to which the PDU set belongs.

It should be noted that in this case, a weighting coefficient is assigned to the radio interface priority corresponding to the PDU set and the priority of the logical channel to which the PDU set belongs. The priority of the PDU set is obtained by multiplying the radio interface priority corresponding to the PDU set and the priority of the logical channel to which the PDU set belongs with the corresponding weighting coefficients and then adding them.

For example, the priority of a PDU set = the radio interface priority corresponding to the PDU set × M% + the priority of the logical channel to which the PDU set belongs × (1-M)%, where M is a number greater than or equal to 0, and the value of M can be a protocol agreement, a network device broadcast, a network device-based terminal configuration, or a network-based logical channel configuration.

It should be noted that the embodiment of the present disclosure may also include a second LCP procedure, and the second LCP procedure includes two rounds of resource allocation. The first round of resource allocation is to allocate resources to the data to be transmitted in each logical channel in accordance with a descending order of the priority of the logical channel for the logical channels having available data, and in accordance with the prioritized bit rate (PBR); if there are still remaining resources after the first round of resource allocation, the second round of resource allocation is continued in accordance with a descending order of the priority of the logical channel, until the resources are exhausted or the data to be transmitted of all logical channels have obtained resources. It should be noted here that allocating resources to the data to be transmitted in the logical channel has the same meaning as allocating resources to the logical channel in the embodiment of the present disclosure. For the sake of abbreviation, in the embodiment of the present disclosure, allocating resources to the data to be transmitted in the logical channel is sometimes also described as allocating resources to the logical channel. On this basis, optionally, in at least one embodiment of the present disclosure, when performing resource allocation, MAC multiplexing rules also need to be considered. Specifically, the method also includes:
Get media access control (MAC) multiplexing rules;
The MAC multiplexing rule includes the following:
   B11. data of logical channels using different LCP procedures cannot be multiplexed into one MAC PDU;
   That is to say, the data of the logical channel using the first LCP procedure and the logical channel using the second LCP procedure cannot be multiplexed into one MAC PDU, and the data in the same MAC PDU uses the same LCP procedure for resource allocation when performing resource allocation.
   B12. data of logical channels using different LCP procedures can be multiplexed into one MAC PDU;
   That is, data of a logical channel using the first LCP procedure and data of a logical channel using the second LCP procedure can be multiplexed into one MAC PDU, and when allocating resources, data in the same MAC PDU can be allocated resources using different LCP procedures.

Optionally, the method for determining the LCP procedure adopted by the logical channel includes one of the following:
C11. receiving logical channel configuration information sent by the network device, and determine the LCP procedure adopted by the logical channel according to the logical channel configuration information;
Optionally, in this case, determining the LCP procedure adopted by the logical channel according to the logical channel configuration information includes the following:
   C111. LCP procedure indication information is optional in the logical channel configuration information; when the LCP procedure indication information exists in the logical channel configuration information, the LCP procedure used by the logical channel is determined to be the first LCP procedure; or, when the LCP procedure indication information does not exist in the logical channel configuration information, the LCP procedure used by the logical channel is determined to be the second LCP procedure;
   In this case, the LCP procedure indication information is optional. When the LCP procedure indication information appears in the logical channel configuration information (or the logical channel configuration information includes the LCP procedure indication information), the terminal device directly determines that the LCP procedure adopted by the logical channel is the first LCP procedure; when the LCP procedure indication information does not appear in the logical channel configuration information (or the logical channel configuration information does not include the LCP procedure indication information), the terminal device directly determines that the LCP procedure adopted by the logical channel is the second LCP procedure.
   C112, LCP procedure indication information is optional in the logical channel configuration information; when the LCP procedure indication information exists in the logical channel configuration information and the value of the LCP procedure indication information is the first value, the LCP procedure adopted by the logical channel is determined to be the first LCP procedure; or, when the LCP procedure indication information exists in the logical channel configuration information and the value of the LCP procedure indication information is the second value, the LCP procedure adopted by the logical channel is determined to be the second LCP procedure; or, when the LCP procedure indication information does not exist in the logical channel configuration information, the LCP procedure adopted by the logical channel is determined to be the second LCP procedure;

It should be noted that the first value is different from the second value.

In this case, the LCP procedure indication information is optional. When the LCP procedure indication information appears in the logical channel configuration information (or the logical channel configuration information includes the LCP procedure indication information), it is also necessary to determine the LCP procedure adopted by the logical channel based on the value of the LCP procedure indication information; specifically, when the LCP procedure indication information appears in the logical channel configuration information (or the logical channel configuration information includes the LCP procedure indication information), and the LCP procedure indication information is the first value (for example, the value of the LCP procedure indication information is 1), then the LCP procedure adopted by the logical channel is determined to be the first LCP procedure; if the LCP procedure indication information does not appear in the logical channel configuration information (or the logical channel configuration information does not include the LCP procedure indication information), the terminal device directly determines that the LCP procedure adopted by the logical channel is the second LCP procedure, or if the LCP procedure indication information appears in the logical channel configuration information (or the logical channel configuration information includes the LCP procedure indication information), and the LCP procedure indication information is the second value (for example, the value of the LCP procedure indication information is 0), then the LCP procedure adopted by the logical channel is determined to be the second LCP procedure.

C113, LCP procedure indication information is mandatory in the logical channel configuration information, when the value of the LCP procedure indication information is the first value, the LCP procedure used by the logical channel is determined to be the first LCP procedure; or, when the value of the LCP procedure indication information is the second value, the LCP procedure used by the logical channel is determined to be the second LCP procedure;

In this case, the LCP procedure indication information must exist in the logical channel configuration information. At this time, it is necessary to determine the LCP procedure used by the logical channel based on the value of the LCP procedure indication information; for example, the LCP procedure indication information uses 1 bit to indicate, and when the value of the bit is the first value (for example, the value is 1), the LCP procedure used by the logical channel is determined to be the first LCP procedure; when the value of the bit is the second value (for example, the value is 0), the LCP procedure used by the logical channel is determined to be the second LCP procedure. For another example, the LCP procedure indication information uses 1 bit to indicate, and when the value of the bit is the first value (for example, the value is 0), the LCP procedure used by the logical channel is determined to be the first LCP procedure; when the value of the bit is the second value (for example, the value is 1), the LCP procedure used by the logical channel is determined to be the second LCP procedure.

C12. determining the LCP procedure used by the logical channel according to the service type carried by the logical channel;

It should be noted that in this case, the terminal device determines the LCP procedure used by the logical channel based on the type of service carried by the logical channel. For example, if the logical channel carries an XR service, the LCP procedure used by the logical channel is the first LCP procedure. When the logical channel carries a non-XR service, the LCP procedure used by the logical channel is the second LCP procedure.

It should be noted that whether the data of the logical channels of different LCP procedures are multiplexed into one MAC PDU will affect the resource allocation process of the terminal device. The resource allocation of the terminal device under different situations is explained as follows.
1. The MAC multiplexing rules include: data of logical channels using different LCP procedures cannot be multiplexed into one MAC PDU

In this case, the terminal device needs to determine the LCP procedure corresponding to the available resource first; when the LCP procedure corresponding to the available resource is the first LCP procedure, resources are allocated to the data to be transmitted for each PDU set according to the priority of each PDU set in the packet data unit (PDU) set having available data that is allowed to use the available resource in descending order. When the LCP procedure corresponding to the available resource is the first LCP procedure, resources are allocated to each logical channel in turn according to a descending order of the priority of the logical channel according to the prioritized bit rate (PBR) for the logical channels having available data to implement the first round of resource allocation. If there are remaining resources after the first round of resource allocation, the second round of resource allocation is continued for the remaining data to be transmitted for each logical channel in turn according to a descending order of the priority of the logical channel until the resources are exhausted or the data of all logical channels have obtained resources.

Optionally, the process of determining the LCP corresponding to the available resource includes:
D11. determining the LCP procedure corresponding to the available resource according to the indication information carried in the available resource;

It should be noted that the indication information includes at least one of the following:
D111, LCP procedure corresponding to the available resource;

In this case, the indication information directly indicates whether the available resource correspond to the first LCP procedure or the second LCP procedure. For example, 1 bit is used to indicate the indication information. When the bit value is 1, it indicates that the indication information indicates the first LCP procedure, that is, the available resource correspond to the first LCP procedure. When the bit value is 0, it indicates that the indication information indicates the second LCP procedure, that is, the available resource correspond to the second LCP procedure. For another example, 1 bit is used to indicate the indication information. When the bit value is 0, it indicates that the indication information indicates the first LCP procedure, that is, the available resource correspond to the first LCP procedure. When the bit value is 1, it indicates that the indication information indicates the second LCP procedure, that is, the available resource correspond to the second LCP procedure.

D112, service information corresponding to the available resource;

In this case, the indication information directly indicates the service information that can be transmitted by the available resource. The service information may be a service type, a service identifier, etc. The terminal device determines whether it is an XR service based on the service information. If it is an XR service, the LCP procedure corresponding to the available resource is directly determined to be the first LCP procedure; otherwise, the LCP procedure corresponding to the available resource is determined to be the second LCP procedure.

D113, logical channel identification information corresponding to the available resource;

It should be noted that, in this case, the logical channel identification information is used to indicate the logical channel that can use the available resource. The terminal device determines the LCP procedure adopted by the logical channel based on the identification information of the logical channel, and determines the LCP procedure adopted by the logical channel as the LCP procedure corresponding to the available resource; specifically, the LCP procedure adopted by the logical channel can be determined by one of the above-mentioned C111-C113.

D12. determining, according to the LCP procedure adopted by the first logical channel, the LCP procedure corresponding to the available resource, where the first logical channel is a logical channel with the highest priority in the first logical channel set that can use the available resource;

It should be noted that in this case, the first logical channel set that can use the available resource is first determined (for example, determined according to the LCP restriction parameter restriction), and then the first logical channel with the highest priority is selected from the first logical channel set, and the LCP procedure used by the first logical channel is determined as the LCP procedure corresponding to the available resource.

2. The MAC multiplexing rules include: data of logical channels using different LCP procedures can be multiplexed into one MAC PDU

In this case, the terminal may adopt one of the following operation modes:
E11. sorting the logical channels that are allowed to use the available resource and have available data in descending order according to the logical channel priority, and perform a first round of resource allocation according to the priority order. When performing the first round of resource allocation, for the logical channels using the first LCP procedure, perform resource allocation according to the first LCP procedure; for the logical channels using the second LCP procedure, allocate resources according to the PBR of the logical channels;

It should be noted that in this case, when the first round of resource allocation is performed, the first round of resource allocation is performed for the logical channels that are allowed to use available resource and have available data according to the LCP procedure applicable to each logical channel. After the first round of resource allocation is completed, if there are remaining resources, the second round of resource allocation will continue to be performed for the logical channels. In this case, the second round of resource allocation usually only includes the second round of resource allocation for the remaining data to be transmitted for each logical channel in the descending order of logical channel priority for the logical channels using the second LCP procedure.

E12. performing a first operation according to the priorities of the first LCP procedure and the second LCP procedure;

It should be noted that in this case, resources are allocated based on the priority of the first LCP procedure. Usually, resources are allocated first to the logical channels corresponding to the high-priority LCP procedures, and when there are remaining resources, they are allocated to the logical channels corresponding to the low-priority LCP procedures.

It should be noted that the priority of the first LCP procedure and the second LCP procedure may be determined by protocol agreement, network device configuration or indication.

Optionally, the first operation includes one of the following:
E121. when the priority of the first LCP procedure is higher than the priority of the second LCP procedure, resources are allocated to the logical channels using the first LCP procedure according to the first LCP procedure first, and when there are remaining resources, resources are allocated to the logical channels using the second LCP procedure according to the second LCP procedure.

It should be noted that in this case, for the logical channel using the first LCP procedure, resources are first allocated to the data to be transmitted for each PDU set in all PDU sets having available data in each logical channel in a descending order of priority, until all resources are allocated or resources are allocated to the data to be transmitted for all PDU sets; if there are still remaining resources, the remaining resources can be allocated to the logical channel using the second LCP procedure according to the second LCP procedure.

E122. in the case where the priority of the second LCP procedure is higher than the priority of the first LCP procedure, the first round of resource allocation is performed based on the PBR in the descending order of priority of the logical channel according to the second LCP procedure for the logical channel using the second LCP procedure; when there are remaining resources after the first round of resource allocation, the resources are continuously allocated to the logical channel using the first LCP procedure according to the first LCP procedure; if there are still remaining resources, the resources are continuously allocated to the remaining data to be transmitted of the logical channel using the second LCP procedure according to the second LCP procedure according to the second LCP procedure;

It should be noted that in this case, resources are first allocated to each logical channel using the second LCP procedure in descending order of logical channel priority according to PBR. If there are remaining resources after the first round of resource allocation, resources are allocated to the logical channels using the first LCP procedure according to the first LCP procedure; after resource allocation for the logical channels using the first LCP procedure, if there are still remaining resources, a second round of resource allocation is performed for the remaining data to be transmitted for each logical channel using the second LCP procedure in descending order of logical channel priority, until the resources are exhausted or the data of all logical channels have obtained resources.

E123. when the priority of the second LCP procedure is higher than that of the first LCP procedure, the first round of resource allocation and the second round of resource allocation are performed according to the second LCP procedure for the logical channels using the second LCP procedure first; if there are remaining resources after the second round of resource allocation, the resource allocation is continued according to the first LCP procedure for the logical channels using the first LCP procedure;

It should be noted that in this case, resources are first allocated to each logical channel using the second LCP procedure in descending order of logical channel priority according to PBR. If there are remaining resources after the first round of resource allocation, the second round of resource allocation will continue to be performed for the remaining data to be transmitted for each logical channel in descending order of logical channel priority until the resources are exhausted or the data of all logical channels have obtained resources; if there are remaining resources after the resources are allocated to the logical channels using the second LCP procedure, resources are allocated for the data to be transmitted for each PDU set in the descending order of priority in all PDU sets having available data in each logical channel for the logical channels using the first LCP procedure, until the resources are allocated or the data to be transmitted of all PDU sets are allocated resources. In other words, in this case, resources are relatively sufficient, and resources can be allocated for both logical channels using the second LCP procedure and logical channels using the first LCP procedure.

Taking resource allocation performed by a terminal in an uplink grant (UL grant) as an example to illustrate a specific application of the embodiment of the present disclosure.

Specific application scenario 1. LCP procedure based on PDU set.

The terminal receives a UL grant. If the first LCP procedure is used on the UL grant, the terminal first determines the set of all PDUs having available data that are allowed to use the UL grant. Specifically, when determining the above PDU set, it is necessary to consider the configuration information of the logical channel to which the PDU set belongs, such as whether the physical parameters (SCS, PUSCH duration, etc.) corresponding to the UL grant meet the LCP restriction of the logical channel, and the LCP procedure allowed by the logical channel.

For the PDU set having available data and allowed to use the UL grant, determine the priority of each PDU set respectively, and allocate resources to the data to be transmitted for each PDU set in a descending order of priority until the resources are exhausted or all PDU sets are allocated resources.

The priority of the PDU set may be determined by, but is not limited to, one of the following:
determining the priority of the PDU set according to the radio interface priority corresponding to the PDU set;
determining the priority of the PDU set according to the radio interface priority corresponding to the PDU set and the priority of the logical channel to which the PDU set belongs.

Specifically, according to the radio interface priority corresponding to the PDU set and the priority of the logical channel to which the PDU set belongs, the specific implementation method of determining the priority of the PDU set may be, but is not limited to, the following methods:
The priority of a PDU set = the radio interface priority corresponding to the PDU set × M% + the priority of the logical channel to which the PDU set belongs × (1-M)%, where M is a number greater than or equal to 0. The value of M can be a protocol agreement, a network device broadcast, a network device-based terminal configuration, or a network-based logical channel configuration.

Specific application scenario 2: data of logical channels using the first LCP procedure and the second LCP procedure are not multiplexed into one MAC PDU.

Step S11: the terminal receives a UL grant and determines an LCP procedure and a logical channel corresponding to the UL grant;

The terminal determines the LCP procedure corresponding to the UL grant may be, but is not limited to, one of the following:
When the network device issues a UL grant to the terminal, the network device carries indication information, where the indication information may be used to indicate one of the following:
the LCP procedure corresponding to the UL grant;
service information corresponding to the UL grant, for example, the service information indicates whether the UL grant is used for an XR service. If the UL grant corresponds to an XR service, it is determined that the LCP procedure corresponding to the UL grant is the first LCP procedure.
the logical channel identification information corresponding to the UL grant, used to indicate which logical channels can use the UL grant. The configuration information of the corresponding logical channel is acquired according to the logical channel identification information, and then the LCP procedure corresponding to the UL grant is determined according to the configuration information of the logical channel.

The terminal receives the UL grant, determines a set of first logical channels that can use the UL grant (for example, based on existing LCP restriction parameter restrictions), then selects a first logical channel with the highest priority from the first logical channel set, and determines the LCP procedure corresponding to the UL grant based on the first logical channel.

Then the terminal can determine the logical channel that can use the UL grant according to the LCP procedure corresponding to the UL grant. First, the logical channel that can use the UL grant needs to meet the existing LCP restriction restrictions (such as SCS restriction, PDSCH duration length restriction), and also needs to support the LCP procedure corresponding to the UL grant. The method for determining the LCP procedure supported by the logical channel can be, but is not limited to, one of the following:
Mode 1: The terminal receives logical channel configuration information from the network device, where the logical channel configuration information determines the LCP procedure adopted by the logical channel;
Mode 2: The terminal determines by itself that if the logical channel carries an XR service, the first LCP procedure is used; otherwise, the second LCP procedure is used.

For the above-mentioned method 1, the configuration information design may be one of the following:
The LCP procedure indication information is optional (OPTIONAL). If this bit appears, the first LCP procedure is used; if this bit does not appear, the second LCP procedure is used;
The LCP procedure indication information uses 1 bit. If the bit value is 1, the first LCP procedure is used; if the bit value is 0, the second LCP procedure is used. Alternatively, if the bit value is 0, the first LCP procedure is used; if the bit value is 1, the second LCP procedure is used.

Step S12: the terminal performs an LCP procedure for the UL grant;

If the terminal determines that the UL grant uses the second LCP procedure, the following operations are performed:
For the logical channels selected in step S11, a first round of resource allocation is performed according to the PBR for each logical channel having available data in descending order of priority of the logical channels;
If the first round of resource allocation is completed and there are remaining resources, resources are allocated to each logical channel in descending order of priority of the logical channels currently requiring data transmission.

If the terminal determines that the UL grant uses the first LCP procedure, the following operations are performed:
According to the logical channels selected in step S11, the PDU sets included in these logical channels are used as the PDU sets with all data transmission requirements that are allowed to use the UL grant.

For the UL grant in step S11, the priority of each PDU set is determined for all PDU sets having available data that are allowed to use the UL grant, and resources are allocated to the data to be transmitted for each PDU set in a descending order of priority of the PDU sets until the resources are exhausted or all PDU sets are allocated resources.

The priority of the PDU set may be determined by, but is not limited to, one of the following:
determining the priority of the PDU set according to the radio interface priority corresponding to the PDU set;
determining the priority of the PDU set according to the radio interface priority corresponding to the PDU set and the priority of the logical channel to which the PDU set belongs.

Specifically, according to the radio interface priority corresponding to the PDU set and the priority of the logical channel to which the PDU set belongs, the specific implementation method of determining the priority of the PDU set may be, but is not limited to, the following methods:
The priority of a PDU set = the radio interface priority corresponding to the PDU set × M% + the priority of the logical channel to which the PDU set belongs × (1-M)%, where M is a number greater than or equal to 0. The value of M can be a protocol agreement, a network device broadcast, a network device-based terminal configuration, or a network-based logical channel configuration.

Specific application scenario three: data of logical channels using the first LCP procedure and the second LCP procedure are allowed to be multiplexed into one MAC PDU.

The terminal receives the UL grant, sorts the logical channels according to their priorities, and allocates the first round of resources to each logical channel in descending order of their priorities.

When performing the first round of resource allocation, for the logical channels using the second LCP procedure, resources can be allocated according to the PBR (Prioritized Bit Rate) based on the logical channel priority and PBR according to the second LCP procedure. For the logical channels using the first LCP procedure, resources are allocated according to the set of all PDUs having available data of the current logical channels.

Specifically, the details of the first LCP procedure are as follows: The specific process of allocating resources for a PDU set in a logical channel is: allocate resources to the data to be transmitted of each PDU set in turn according to descending order of the priority of the PDU sets in the logical channel, until the resources are exhausted or all PDU sets are allocated resources.

When there are remaining resources after the first round of resource allocation, resources will be allocated to the logical channels using the second LCP procedure with remaining data to be transmitted in descending order of the priority of the logical channels until the resources are exhausted or resources are allocated to all data to be transmitted.

Specific application scenario 4: data of logical channels using the first LCP procedure and the second LCP procedure are allowed to be multiplexed into one MAC PDU.

The network configuration or protocol agreement or the network indicates the priority between the first LCP procedure and the second LCP procedure through UL grant. For example, if the priority of the second LCP procedure is higher, resources are allocated to all logical channels that are allowed to use the second LCP procedure according to the second LCP procedure first, and if there are remaining resources, resources are allocated to the logical channels that use the first LCP procedure according to the first LCP procedure.

Taking the first LCP procedure priority as an example, the description is as follows:
When the terminal receives the UL grant, it will prioritize allocating resources to the logical channel using the first LCP procedure. The terminal first determines the set of PDUs that are allowed to use the UL grant and have available data. Specifically, when determining the above PDU set, it is necessary to consider the configuration information of the logical channel to which the PDU set belongs, such as whether the physical parameters corresponding to the UL grant (subcarrier spacing (SCS), physical uplink shared channel (PUSCH) duration length, etc.) meet the LCP of the logical channel. restriction, and the LCP procedures allowed for the logical channel.

For all PDU sets having available data that are allowed to use the UL grant, the priority of each PDU set is determined separately, and resources are allocated to the data to be transmitted for each PDU set in a descending order of priority until the resources are exhausted or all PDU sets are allocated resources.

The priority of the PDU set may be determined by, but is not limited to, one of the following:
determining the priority of the PDU set according to the radio interface priority corresponding to the PDU set;
determining the priority of the PDU set according to the radio interface priority corresponding to the PDU set and the priority of the logical channel to which the PDU set belongs.

Specifically, according to the radio interface priority corresponding to the PDU set and the priority of the logical channel to which the PDU set belongs, the specific implementation method of determining the priority of the PDU set may be, but is not limited to, the following methods:
The priority of a PDU set = the radio interface priority corresponding to the PDU set × M% + the priority of the logical channel to which the PDU set belongs × (1-M)%, where M is a number greater than or equal to 0. The value of M can be a protocol agreement, a network device broadcast, a network device-based terminal configuration, or a network-based logical channel configuration.

After the terminal completes resource allocation according to the first LCP procedure, if there are remaining resources, resource allocation is performed for the remaining resources according to the second LCP procedure; that is, resources are allocated according to PBR in descending order of the priority of the logical channels that are allowed to use the UL grant and use the second LCP procedure. If there are remaining resources, resources are allocated for the remaining data to be transmitted outside the PBR in descending order of the priority of the logical channels.

It should be noted that at least one embodiment of the present disclosure introduces a new uplink LCP procedure based on PDU sets, that is, when the terminal receives a UL grant, it determines the priority of each PDU set for all PDU sets having available data that are allowed to use the UL grant, and allocates resources to the data to be transmitted for each PDU set in a descending order of priority of the PDU sets until the resources are exhausted or all PDU sets are allocated resources; this can better meet the QoS requirements of the XR service.

The technical solution provided by the embodiments of the present disclosure can be applicable to a variety of systems, especially 5G systems. For example, the applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal equipment and network equipment. The system may also include a core network part, such as an evolved packet system (EPS), a 5G system (5GS), etc.

The terminal device of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device of the present disclosure may be a base station, which may include multiple cells that provide services to the terminal. Depending on the specific application scenario, the base station may also be called an access point, or may be a device in the access network that communicates with the wireless terminal device through one or more sectors on the radio interface, or other names. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the radio interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be 2D-MIMO, 3D-MIMO, FD-MIMO or massive-MIMO, or it can be diversity transmission, precoding transmission or beamforming transmission, etc.

Corresponding to the implementation on the terminal device side, as shown in FIG4, the embodiment of the present disclosure provides an information configuration method, which is executed by a network device and includes:
Step S401, sending logical channel configuration information to a terminal device, where the logical channel configuration information is configured to assist the terminal device in determining a logical channel prioritization (LCP) procedure adopted by a logical channel;
where the LCP procedure includes at least one of the following:
   a first LCP procedure, where the first LCP procedure is: according to a descending order of a priority of each of packet data unit (PDU) sets having available data and allowed to use the available resource, allocating resources to the data to be transmitted of each PDU set; or
   a second LCP procedure, including two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resource.

Optionally, the logical channel configuration information includes LCP procedure indication information.

Optionally, the method further includes:
sending available resource to the terminal device, where the available resource carry indication information;
the indication information includes at least one of the following:
   a LCP procedure corresponding to the available resource;
   service information corresponding to the available resource; or
   logical channel identification information corresponding to the available resource.

It should be noted that all descriptions on the network device side in the above embodiments are applicable to the embodiments of the information configuration method applied to the network device, and can achieve the same technical effects.

As shown in FIG.5, an embodiment of the present disclosure provides a resource allocation apparatus 500, which is applied to a terminal device, including:
a first obtaining unit 501 is used to acquire available resource;
a first performing unit 502, configured to obtain an available resource;
a first performing unit, configured to, for the available resource, perform a first logical channel prioritization (LCP) procedure;
where the first LCP procedure includes: according to a descending order of a priority of each of packet data unit (PDU) sets having available data and allowed to use the available resource, allocating resources to the data to be transmitted of each PDU set.

Optionally, the method for obtaining the priority of the PDU set includes:
determining the priority of the PDU set according to a radio interface priority corresponding to the PDU sets; or
determining the priority of the PDU set according to a radio interface priority corresponding to the PDU set and a priority of a logical channel to which the PDU set belongs.

Optionally, the method for determining the radio interface priority corresponding to the PDU set includes one of the following:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

Optionally, the determining the priority of the PDU set according to the radio interface priority corresponding to the PDU set and the priority of the logical channel to which the PDU set belongs includes:
determining the priority of the PDU set, by taking a weighted sum of the radio interface priority corresponding to the PDU set and the priority of the logical channel to which the PDU set belongs.

Optionally, the resource allocation apparatus further includes:
a second obtaining unit, configured to obtain a media access control MAC multiplexing rule;
the MAC multiplexing rule includes one of the following:
   data of logical channels using different LCP procedures is not to be multiplexed into one MAC PDU;
   data of logical channels using different LCP procedures is to be multiplexed into one MAC PDU;
   where the LCP procedure includes at least one of the following:
      a first LCP procedure; or
      a second LCP procedure, including two rounds of resource allocation, where a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

Optionally, the resource allocation apparatus further includes:
a first determining unit, configured to receive logical channel configuration information sent by a network device, and determining an LCP procedure adopted by the logical channel according to the logical channel configuration information; or
a second determining unit, configured to determine the LCP procedure used by the logical channel according to a service type carried by the logical channel.

Optionally, the first determining unit is configured to:
the LCP procedure indication information being optional in the logical channel configuration information; when the LCP procedure indication information exists in the logical channel configuration information, determine the LCP procedure adopted by the logical channel to be the first LCP procedure; or, when the LCP procedure indication information does not exist in the logical channel configuration information, determine the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determine the LCP procedure adopted by the logical channel to be the first LCP procedure; or, when the LCP procedure indication information exists in the logical channel configuration information and a value of the LCP procedure indication information is a second value, determine the LCP procedure adopted by the logical channel to be the second LCP procedure; or, when the LCP procedure indication information does not exist in the logical channel configuration information, determine the LCP procedure adopted by the logical channel to be the second LCP procedure; or
the LCP procedure indication information being mandatory in the logical channel configuration information; when a value of the LCP procedure indication information is a first value, determine the LCP procedure adopted by the logical channel to be the first LCP procedure; or, when a value of the LCP procedure indication information is a second value, determine the LCP procedure adopted by the logical channel to be the second LCP procedure.

Optionally, when the MAC multiplexing rule includes data of logical channels using different LCP procedures is not be multiplexed into one MAC PDU, the resource allocation apparatus further includes:
a third determining unit, configured to determine the LCP procedure corresponding to the available resource;
a first allocating unit, configured to when the LCP procedure corresponding to the available resource is the first LCP procedure, according to the descending order of priority of each of the PDU sets having available data and allowed to use the available resource, allocate resources to the data to be transmitted of each PDU set.

Optionally, the third determining unit is configured to:
determine, according to the indication information carried in the available resource, the LCP procedure corresponding to the available resource; or
determine, according to the LCP procedure adopted by the first logical channel, the LCP procedure corresponding to the available resource, where the first logical channel is a logical channel with a highest priority in the first logical channel set for which the available resource are usable;
the indication information includes at least one of the following:
   a LCP procedure corresponding to the available resource;
   service information corresponding to the available resource; or
   logical channel identification information corresponding to the available resource.

Optionally, when the MAC multiplexing rule includes data of logical channels using different LCP procedures is to be multiplexed into one MAC PDU, the resource allocation apparatus further includes one of the following:
a second allocating unit, configured to sort the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
a second performing unit, configured to perform a first operation according to the priorities of the first LCP procedure and the second LCP procedure;
where the first operation includes:
   in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
   in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
   in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

It should be noted that the terminal device embodiment is a terminal device that corresponds one-to-one to the above-mentioned method embodiment. All implementation methods in the above-mentioned method embodiment are applicable to the embodiment of the terminal device and can achieve the same technical effect.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

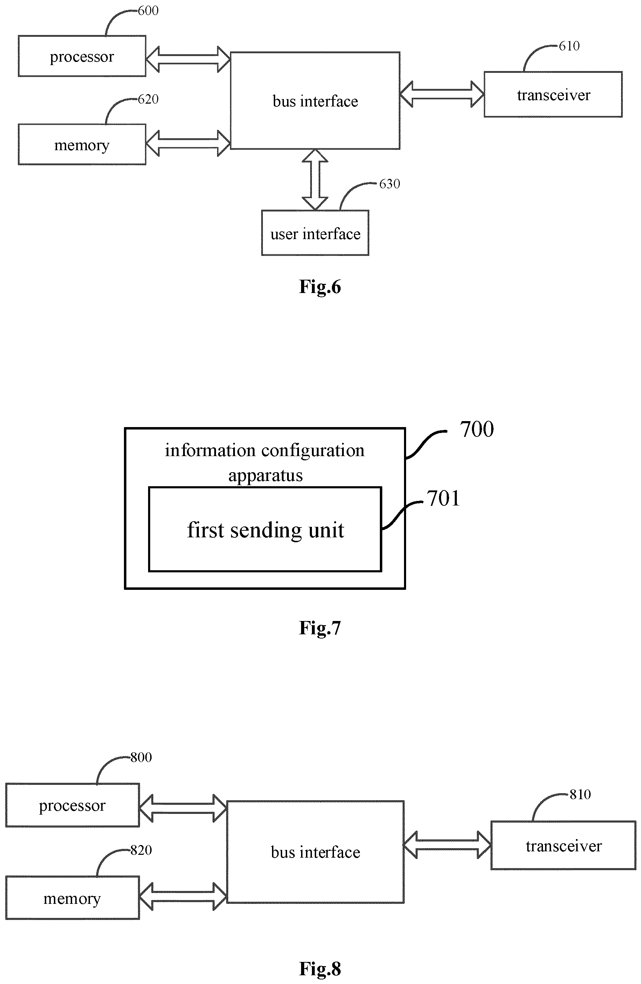

As shown in FIG.6, an embodiment of the present disclosure further provides a terminal device, including a processor 600, a transceiver 610, a memory 620, and a program stored in the memory 620 and executable on the processor 600; where the transceiver 610 is connected to the processor 600 and the memory 620 through a bus interface, where the processor 600 is used to read the program in the memory and execute the following process:
obtaining an available resource;
for the available resource, performing a first logical channel prioritization (LCP) procedure;
where the first LCP procedure includes: according to a descending order of a priority of each of packet data unit (PDU) sets having data transmission re630quirements and allowed to use the available resource, allocating resources to the data to be transmitted of each PDU set.

The transceiver 610 is configured to receive and send data under the control of the processor 600.

In Fig.6, the bus architecture may include any number of interconnected buses and bridges, specifically one or more processors represented by processor 600 and various circuits of memory represented by memory 620 are linked together. The bus architecture can also link various other circuits such as peripherals, voltage regulators, and power management circuits together, which are all well known in the art, so they are not further described herein. The bus interface provides an interface. The transceiver 610 can be a plurality of components, namely, a transmitter and a receiver, providing a unit for communicating with various other devices on a transmission medium, and these transmission media include transmission media such as wireless channels, wired channels, and optical cables. For different user devices, the user interface 630 can also be an interface that can be connected to external and internal devices, and the connected devices include but are not limited to keypads, displays, speakers, microphones, joysticks, etc.

The processor 600 is responsible for managing the bus architecture and general processing, and the memory 620 can store data used by the processor 600 when performing operations.

Optionally, the processor 600 may be a central processing unit (CPU), an application specific integrated circuit (ASIC), a field programmable gate array (FPGA) or a complex programmable logic device (CPLD), and the processor may also adopt a multi-core architecture.

The processor calling the computer program stored in the memory to perform any of the methods provided by the embodiments of the present disclosure according to the obtained executable instructions. The processor and the memory can also be arranged physically separately.

Optionally, the processor 600 is further configured to read the computer program in the memory to perform:
determining the priority of the PDU set according to a radio interface priority corresponding to the PDU sets; or
determining the priority of the PDU set according to a radio interface priority corresponding to the PDU set and a priority of a logical channel to which the PDU set belongs.

Optionally, the processor is further configured to read the computer program in the memory to perform:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

Optionally, the processor is further configured to read the computer program in the memory to perform:
determining the priority of the PDU set, by taking a weighted sum of the radio interface priority corresponding to the PDU set and the priority of the logical channel to which the PDU set belongs.

Optionally, the processor is further configured to read the computer program in the memory to perform:
obtaining a media access control MAC multiplexing rule;
the MAC multiplexing rule includes one of the following:
   data of logical channels using different LCP procedures is not to be multiplexed into one MAC PDU;
   data of logical channels using different LCP procedures is to be multiplexed into one MAC PDU;
   where the LCP procedure includes at least one of the following:
      a first LCP procedure; or
      a second LCP procedure, including two rounds of resource allocation, where a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

Optionally, the processor is further configured to read the computer program in the memory to perform:
receiving logical channel configuration information sent by a network device through the transceiver, and determining an LCP procedure adopted by the logical channel according to the logical channel configuration information; or
determining the LCP procedure used by the logical channel according to a service type carried by the logical channel.

Optionally, the processor is further configured to read the computer program in the memory to perform:
the LCP procedure indication information being optional in the logical channel configuration information; when the LCP procedure indication information exists in the logical channel configuration information, determining the LCP procedure adopted by the logical channel to be the first LCP procedure; or, when the LCP procedure indication information does not exist in the logical channel configuration information, determining the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determining the LCP procedure adopted by the logical channel to be the first LCP procedure; or, when the LCP procedure indication information exists in the logical channel configuration information and a value of the LCP procedure indication information is a second value, determining the LCP procedure adopted by the logical channel to be the second LCP procedure; or, when the LCP procedure indication information does not exist in the logical channel configuration information, determining the LCP procedure adopted by the logical channel to be the second LCP procedure; or
the LCP procedure indication information being mandatory in the logical channel configuration information; when a value of the LCP procedure indication information is a first value, determining the LCP procedure adopted by the logical channel to be the first LCP procedure; or, when a value of the LCP procedure indication information is a second value, determining the LCP procedure adopted by the logical channel to be the second LCP procedure.

Optionally, when the MAC multiplexing rule includes data of logical channels using different LCP procedures is not be multiplexed into one MAC PDU, the processor is further configured to read the computer program in the memory to perform:
determining the LCP procedure corresponding to the available resource;
when the LCP procedure corresponding to the available resource is the first LCP procedure, according to the descending order of priority of each of the PDU sets having available data and allowed to use the available resource, allocating resources to the data to be transmitted of each PDU set.

Optionally, the processor is further configured to read the computer program in the memory to perform:
determining, according to the indication information carried in the available resource, the LCP procedure corresponding to the available resource; or
determining, according to the LCP procedure adopted by the first logical channel, the LCP procedure corresponding to the available resource, where the first logical channel is a logical channel with a highest priority in the first logical channel set for which the available resource are usable;
the indication information includes at least one of the following:
   a LCP procedure corresponding to the available resource;
   service information corresponding to the available resource; or
   logical channel identification information corresponding to the available resource.

Optionally, when the MAC multiplexing rule includes data of logical channels using different LCP procedures is to be multiplexed into one MAC PDU, the processor is further configured to read the computer program in the memory to perform one of the following:
sorting the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
performing a first operation according to the priorities of the first LCP procedure and the second LCP procedure;
where the first operation includes:
   in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
   in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
   in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

It should be noted here that the above-mentioned terminal device provided in the embodiment of the present disclosure can implement all the method steps implemented in the above-mentioned method embodiment, and can achieve the same technical effect. The parts and beneficial effects of this embodiment that are the same as the method embodiment will not be described in detail here.

The embodiment of the present disclosure also provides a computer-readable storage medium, on which a computer program is stored, where the computer program, when executed by a processor, implements the steps of the resource allocation method applied to a terminal device. The processor-readable storage medium can be any available medium or data storage device that the processor can access, including but not limited to magnetic storage (such as a floppy disk, a hard disk, a magnetic tape, a magneto-optical (MO)), etc.), optical storage (such as an optical disc (Compact Disk, CD), a high-density digital video disc (Digital Video Disc, DVD), a Blu-ray Disc (Blu-ray Disc, BD), a high-definition universal disc (High-Definition Versatile Disc, HVD), etc.), and semiconductor storage (such as ROM, Erasable Programmable Read-Only Memory (Erasable Programmable Read-Only Memory, EPROM), Electrically Erasable Programmable Read Only Memory (EEPROM), Non-volatile Memory (NAND FLASH), Solid State Disk (SSD)), etc.

As shown in FIG. 7, an embodiment of the present disclosure provides an information configuration apparatus 700, which is applied to a network device, including:
a first sending unit 701, configured to send logical channel configuration information to a terminal device, where the logical channel configuration information is configured to assist the terminal device in determining a logical channel prioritization (LCP) procedure adopted by a logical channel;
where the LCP procedure includes at least one of the following:
   a first LCP procedure, where the first LCP procedure is: according to a descending order of a priority of each of packet data unit (PDU) sets having available data and allowed to use the available resource, allocating resources to the data to be transmitted of each PDU set; or
   a second LCP procedure, including two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

Optionally, the logical channel configuration information includes LCP procedure indication information.

Optionally, he information configuration apparatus further includes:
a second sending unit, configured to sending available resource to the terminal device, where the available resource carry indication information;
the indication information includes at least one of the following:
   a LCP procedure corresponding to the available resource;
   service information corresponding to the available resource; or
   logical channel identification information corresponding to the available resource.

It should be noted that the network device embodiment is a network device that corresponds one-to-one to the above method embodiment, and all implementation methods in the above method embodiment are applicable to the embodiment of the network device and can achieve the same technical effect.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

As shown in FIG.8, an embodiment of the present disclosure further provides a network device, including a processor 800, a transceiver 810, a memory 820, and a program stored in the memory 820 and executable on the processor 800; where the transceiver 810 is connected to the processor 800 and the memory 820 through a bus interface, where the processor 800 is used to read the program in the memory and execute the following process:
sending logical channel configuration information to a terminal device through the transceiver 810, where the logical channel configuration information is configured to assist the terminal device in determining a logical channel prioritization (LCP) procedure adopted by a logical channel;
where the LCP procedure includes at least one of the following:
   a first LCP procedure, where the first LCP procedure is: according to a descending order of a priority of each of packet data unit (PDU) sets having available data and allowed to use the available resource, allocating resources to the data to be transmitted of each PDU set; or
   a second LCP procedure, including two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

The transceiver 810 is configured to receive and send data under the control of the processor 800.

In Figure 8, the bus architecture can include any number of interconnected buses and bridges, specifically one or more processors represented by processor 800 and various circuits of memory represented by memory 820 are linked together. The bus architecture can also link various other circuits such as peripherals, voltage regulators, and power management circuits together, which are all well known in the art, so they are not further described herein. The bus interface provides an interface. The transceiver 810 can be a plurality of components, that is, including a transmitter and a receiver, providing a unit for communicating with various other devices on a transmission medium, and these transmission media include transmission media such as wireless channels, wired channels, and optical cables. The processor 800 is responsible for managing the bus architecture and general processing, and the memory 820 can store data used by the processor 800 when performing operations.

The processor 800 may be a central processing unit (CPU), an application specific integrated circuit (ASIC), a field programmable gate array (FPGA) or a complex programmable logic device (CPLD). The processor may also adopt a multi-core architecture.

Optionally, the logical channel configuration information includes LCP procedure indication information.

Optionally, the processor 800 is further configured to read the computer program in the memory to perform:
sending available resource to the terminal device through the transceiver 810, where the available resource carry indication information;
the indication information includes at least one of the following:
   a LCP procedure corresponding to the available resource;
   service information corresponding to the available resource; or
   logical channel identification information corresponding to the available resource.

It should be noted here that the above-mentioned network device provided in the embodiment of the present disclosure can implement all the method steps implemented in the above-mentioned method embodiment, and can achieve the same technical effect. The parts and beneficial effects of this embodiment that are the same as the method embodiment will not be described in detail here.

The embodiment of the present disclosure also provides a computer-readable storage medium, on which a computer program is stored, where the computer program, when executed by a processor, implements the steps of the information configuration method applied to a network device. The processor-readable storage medium can be any available medium or data storage device that can be accessed by the processor, including but not limited to magnetic storage (such as floppy disk, hard disk, magnetic tape, magneto-optical disk (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first" and "second" in the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the sequence. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating that A alone, B alone, C alone, and A and B are present, B and C are present, A and C are present, and A, B and C are present in 7 situations. Similarly, the use of "at least one of A and B" in the specification and claims should be understood as "A alone, B alone, or A and B are present".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A resource allocation method, performed a terminal device, comprising:
obtaining an available resource;
for the available resource, performing a first logical channel prioritization (LCP) procedure;
wherein the first LCP procedure comprises: according to a descending order of a priority of each of packet data unit (PDU) sets having available data and allowed to use the available resource, allocating resources to the data to be transmitted of each PDU set.

2. The method according to claim 1, wherein the method for obtaining the priority of the PDU set comprises:
determining the priority of the PDU set according to a radio interface priority corresponding to the PDU sets; or
determining the priority of the PDU set according to a radio interface priority corresponding to the PDU set and a priority of a logical channel to which the PDU set belongs.

3. The method according to claim 2, wherein the method for determining the radio interface priority corresponding to the PDU set comprises one of the following:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

4. The method according to claim 2, wherein the determining the priority of the PDU set according to the radio interface priority corresponding to the PDU set and the priority of the logical channel to which the PDU set belongs comprises:
determining the priority of the PDU set, by taking a weighted sum of the radio interface priority corresponding to the PDU set and the priority of the logical channel to which the PDU set belongs.

5. The method according to claim 1, further comprising:
obtaining a media access control MAC multiplexing rule;
the MAC multiplexing rule comprises one of the following:
data of logical channels using different LCP procedures is not to be multiplexed into one MAC PDU;
data of logical channels using different LCP procedures is to be multiplexed into one MAC PDU;
wherein the LCP procedure comprises at least one of the following:
a first LCP procedure; or
a second LCP procedure, comprising two rounds of resource allocation, wherein a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

6. The method according to claim 5, further comprising:
receiving logical channel configuration information sent by a network device, and determining an LCP procedure adopted by the logical channel according to the logical channel configuration information; or
determining the LCP procedure used by the logical channel according to a service type carried by the logical channel.

7. The method according to claim 6, wherein the determining the LCP procedure adopted by the logical channel according to the logical channel configuration information comprises:
the LCP procedure indication information being optional in the logical channel configuration information; when the LCP procedure indication information exists in the logical channel configuration information, determining the LCP procedure adopted by the logical channel to be the first LCP procedure; or, when the LCP procedure indication information does not exist in the logical channel configuration information, determining the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determining the LCP procedure adopted by the logical channel to be the first LCP procedure; or, when the LCP procedure indication information exists in the logical channel configuration information and a value of the LCP procedure indication information is a second value, determining the LCP procedure adopted by the logical channel to be the second LCP procedure; or, when the LCP procedure indication information does not exist in the logical channel configuration information, determining the LCP procedure adopted by the logical channel to be the second LCP procedure; or
the LCP procedure indication information being mandatory in the logical channel configuration information; when a value of the LCP procedure indication information is a first value, determining the LCP procedure adopted by the logical channel to be the first LCP procedure; or, when a value of the LCP procedure indication information is a second value, determining the LCP procedure adopted by the logical channel to be the second LCP procedure.

8. The method according to claim 5, wherein when the MAC multiplexing rule comprises data of logical channels using different LCP procedures is not be multiplexed into one MAC PDU, the method further comprises:
determining the LCP procedure corresponding to the available resource;
when the LCP procedure corresponding to the available resource is the first LCP procedure, according to the descending order of priority of each of the PDU sets having available data and allowed to use the available resource, allocating resources to the data to be transmitted of each PDU set.

9. The method according to claim 8, wherein the determining the LCP corresponding to the available resource comprises:
determining, according to the indication information carried in the available resource, the LCP procedure corresponding to the available resource; or
determining, according to the LCP procedure adopted by the first logical channel, the LCP procedure corresponding to the available resource, wherein the first logical channel is a logical channel with a highest priority in the first logical channel set for which the available resource are usable;
the indication information comprises at least one of the following:
a LCP procedure corresponding to the available resource;
service information corresponding to the available resource; or
logical channel identification information corresponding to the available resource.

10. The method according to claim 5, wherein when the MAC multiplexing rule comprises data of logical channels using different LCP procedures is to be multiplexed into one MAC PDU, the method further comprises one of the following:
sorting the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
performing a first operation according to the priorities of the first LCP procedure and the second LCP procedure;
wherein the first operation comprises:
in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

11. An information configuration method, performed by a network device, comprising:
sending logical channel configuration information to a terminal device, wherein the logical channel configuration information is configured to assist the terminal device in determining a logical channel prioritization (LCP) procedure adopted by a logical channel;
wherein the LCP procedure comprises at least one of the following:
a first LCP procedure, wherein the first LCP procedure is: according to a descending order of a priority of each of packet data unit (PDU) sets having available data and allowed to use the available resource, allocating resources to the data to be transmitted of each PDU set; or
a second LCP procedure, comprising two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

12. The method according to claim 11, wherein the logical channel configuration information comprises LCP procedure indication information.

13. The method according to claim 11, further comprising:
sending available resource to the terminal device, wherein the available resource carry indication information;
the indication information comprises at least one of the following:
a LCP procedure corresponding to the available resource;
service information corresponding to the available resource; or
logical channel identification information corresponding to the available resource.

14. A terminal device, comprising a memory, a transceiver, and a processor, wherein
the memory is configured to store a computer program; the transceiver is configured to send and receive data under a control of the processor; and the processor is configured to read the computer program in the memory to perform:
obtaining an available resource;
for the available resource, performing a first logical channel prioritization (LCP) procedure;
wherein the first LCP procedure comprises: according to a descending order of a priority of each of packet data unit (PDU) sets having available data and allowed to use the available resource, allocating resources to the data to be transmitted of each PDU set.

15. The terminal device according to claim 14, wherein the processor is further configured to read the computer program in the memory to perform:
determining the priority of the PDU set according to a radio interface priority corresponding to the PDU sets; or
determining the priority of the PDU set according to a radio interface priority corresponding to the PDU set and a priority of a logical channel to which the PDU set belongs.

16. The terminal device according to claim 15, wherein the processor is further configured to read the computer program in the memory to perform:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

17. The terminal device according to claim 15, wherein the processor is further configured to read the computer program in the memory to perform:
determining the priority of the PDU set, by taking a weighted sum of the radio interface priority corresponding to the PDU set and the priority of the logical channel to which the PDU set belongs.

18. The terminal device according to claim 14, wherein the processor is further configured to read the computer program in the memory to perform:
obtaining a media access control MAC multiplexing rule;
the MAC multiplexing rule comprises one of the following:
data of logical channels using different LCP procedures is not to be multiplexed into one MAC PDU;
data of logical channels using different LCP procedures is to be multiplexed into one MAC PDU;
wherein the LCP procedure comprises at least one of the following:
a first LCP procedure; or
a second LCP procedure, comprising two rounds of resource allocation, wherein a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

19. The terminal device according to claim 18, wherein the processor is further configured to read the computer program in the memory to perform:
receiving logical channel configuration information sent by a network device through the transceiver, and determining an LCP procedure adopted by the logical channel according to the logical channel configuration information; or
determining the LCP procedure used by the logical channel according to a service type carried by the logical channel.

20. The terminal device according to claim 19, wherein the processor is further configured to read the computer program in the memory to perform:
the LCP procedure indication information being optional in the logical channel configuration information; when the LCP procedure indication information exists in the logical channel configuration information, determining the LCP procedure adopted by the logical channel to be the first LCP procedure; or, when the LCP procedure indication information does not exist in the logical channel configuration information, determining the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determining the LCP procedure adopted by the logical channel to be the first LCP procedure; or, when the LCP procedure indication information exists in the logical channel configuration information and a value of the LCP procedure indication information is a second value, determining the LCP procedure adopted by the logical channel to be the second LCP procedure; or, when the LCP procedure indication information does not exist in the logical channel configuration information, determining the LCP procedure adopted by the logical channel to be the second LCP procedure; or
the LCP procedure indication information being mandatory in the logical channel configuration information; when a value of the LCP procedure indication information is a first value, determining the LCP procedure adopted by the logical channel to be the first LCP procedure; or, when a value of the LCP procedure indication information is a second value, determining the LCP procedure adopted by the logical channel to be the second LCP procedure.

21. The terminal device according to claim 18, wherein when the MAC multiplexing rule comprises data of logical channels using different LCP procedures is not be multiplexed into one MAC PDU, the processor is further configured to read the computer program in the memory to perform:
determining the LCP procedure corresponding to the available resource;
when the LCP procedure corresponding to the available resource is the first LCP procedure, according to the descending order of priority of each of the PDU sets having available data and allowed to use the available resource, allocating resources to the data to be transmitted of each PDU set.

22. The terminal device according to claim 21, wherein the processor is further configured to read the computer program in the memory to perform:
determining, according to the indication information carried in the available resource, the LCP procedure corresponding to the available resource; or
determining, according to the LCP procedure adopted by the first logical channel, the LCP procedure corresponding to the available resource, wherein the first logical channel is a logical channel with a highest priority in the first logical channel set for which the available resource are usable;
the indication information comprises at least one of the following:
a LCP procedure corresponding to the available resource;
service information corresponding to the available resource; or
logical channel identification information corresponding to the available resource.

23. The terminal device according to claim 18, wherein when the MAC multiplexing rule comprises data of logical channels using different LCP procedures is to be multiplexed into one MAC PDU, the processor is further configured to read the computer program in the memory to perform one of the following:
sorting the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
performing a first operation according to the priorities of the first LCP procedure and the second LCP procedure;
wherein the first operation comprises:
in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

24. A network device, comprising a memory, a transceiver, and a processor:
the memory is configured to store a computer program; the transceiver is configured to send and receive data under a control of the processor; and the processor is configured to read the computer program in the memory to perform:
sending logical channel configuration information to a terminal device through the transceiver, wherein the logical channel configuration information is configured to assist the terminal device in determining a logical channel prioritization (LCP) procedure adopted by a logical channel;
wherein the LCP procedure comprises at least one of the following:
a first LCP procedure, wherein the first LCP procedure is: according to a descending order of a priority of each of packet data unit (PDU) sets having available data and allowed to use the available resource, allocating resources to the data to be transmitted of each PDU set; or
a second LCP procedure, comprising two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

25. The network device according to claim 24, wherein the logical channel configuration information comprises LCP procedure indication information.

26. The network device according to claim 24, wherein the processor is further configured to read the computer program in the memory to perform:
sending available resource to the terminal device through the transceiver, wherein the available resource carry indication information;
the indication information comprises at least one of the following:
a LCP procedure corresponding to the available resource;
service information corresponding to the available resource; or
logical channel identification information corresponding to the available resource.

27. A resource allocation apparatus, applied to a terminal device, comprising:
a first obtaining unit, configured to obtain an available resource;
a first performing unit, configured to, for the available resource, perform a first logical channel prioritization (LCP) procedure;
wherein the first LCP procedure comprises: according to a descending order of a priority of each of packet data unit (PDU) sets having available data and allowed to use the available resource, allocating resources to the data to be transmitted of each PDU set.

28. The resource allocation apparatus according to claim 27, wherein the method for obtaining the priority of the PDU set comprises:
determining the priority of the PDU set according to a radio interface priority corresponding to the PDU sets; or
determining the priority of the PDU set according to a radio interface priority corresponding to the PDU set and a priority of a logical channel to which the PDU set belongs.

29. The resource allocation apparatus according to claim 28, wherein the method for determining the radio interface priority corresponding to the PDU set comprises one of the following:
determining a priority parameter in a quality of service (QoS) parameter of the PDU set as the radio interface priority corresponding to the PDU set;
receiving the radio interface priority corresponding to the PDU set configured by a network device; or
receiving a mapping relationship between a priority parameter in the QoS parameter of the PDU set and a radio interface priority of the PDU set configured by the network device, and determining the radio interface priority corresponding to the priority parameter in the QoS parameters of the PDU set according to the mapping relationship.

30. The resource allocation apparatus according to claim 28, wherein the determining the priority of the PDU set according to the radio interface priority corresponding to the PDU set and the priority of the logical channel to which the PDU set belongs comprises:
determining the priority of the PDU set, by taking a weighted sum of the radio interface priority corresponding to the PDU set and the priority of the logical channel to which the PDU set belongs.

31. The resource allocation apparatus according to claim 27, further comprising:
a second obtaining unit, configured to obtain a media access control MAC multiplexing rule;
the MAC multiplexing rule comprises one of the following:
data of logical channels using different LCP procedures is not to be multiplexed into one MAC PDU;
data of logical channels using different LCP procedures is to be multiplexed into one MAC PDU;
wherein the LCP procedure comprises at least one of the following:
a first LCP procedure; or
a second LCP procedure, comprising two rounds of resource allocation, wherein a first round of resource allocation is to allocate resources to the data to be transmitted in each logical channel in turn according to the prioritized bit rate (PBR) and in a descending order of logical channel priority for the logical channels having available data; if there are still remaining resources after the first round of resource allocation, the second round of resource allocation is continued for the remaining data to be transmitted for each logical channel in the descending order of logical channel priority, until the resources are exhausted or the data to be transmitted of all logical channels have obtained resources.

32. The resource allocation apparatus according to claim 31, further comprising:
a first determining unit, configured to receive logical channel configuration information sent by a network device, and determining an LCP procedure adopted by the logical channel according to the logical channel configuration information; or
a second determining unit, configured to determine the LCP procedure used by the logical channel according to a service type carried by the logical channel.

33. The resource allocation apparatus according to claim 32, wherein the first determining unit is configured to:
the LCP procedure indication information being optional in the logical channel configuration information; when the LCP procedure indication information exists in the logical channel configuration information, determine the LCP procedure adopted by the logical channel to be the first LCP procedure; or, when the LCP procedure indication information does not exist in the logical channel configuration information, determine the LCP procedure adopted by the logical channel to be the second LCP procedure; or
the LCP procedure indication information being optional in the logical channel configuration information; when the LCP procedure indication information exists in the logical channel configuration information and a value of the LCP procedure indication information is a first value, determine the LCP procedure adopted by the logical channel to be the first LCP procedure; or, when the LCP procedure indication information exists in the logical channel configuration information and a value of the LCP procedure indication information is a second value, determine the LCP procedure adopted by the logical channel to be the second LCP procedure; or, when the LCP procedure indication information does not exist in the logical channel configuration information, determine the LCP procedure adopted by the logical channel to be the second LCP procedure; or
the LCP procedure indication information being mandatory in the logical channel configuration information; when a value of the LCP procedure indication information is a first value, determine the LCP procedure adopted by the logical channel to be the first LCP procedure; or, when a value of the LCP procedure indication information is a second value, determine the LCP procedure adopted by the logical channel to be the second LCP procedure.

34. The resource allocation apparatus according to claim 31, wherein when the MAC multiplexing rule comprises data of logical channels using different LCP procedures is not be multiplexed into one MAC PDU, the resource allocation apparatus further comprises:
a third determining unit, configured to determine the LCP procedure corresponding to the available resource;
a first allocating unit, configured to when the LCP procedure corresponding to the available resource is the first LCP procedure, according to the descending order of priority of each of the PDU sets having available data and allowed to use the available resource, allocate resources to the data to be transmitted of each PDU set.

35. The resource allocation apparatus according to claim 34, wherein the third determining unit is configured to:
determine, according to the indication information carried in the available resource, the LCP procedure corresponding to the available resource; or
determine, according to the LCP procedure adopted by the first logical channel, the LCP procedure corresponding to the available resource, wherein the first logical channel is a logical channel with a highest priority in the first logical channel set for which the available resource are usable;
the indication information comprises at least one of the following:
a LCP procedure corresponding to the available resource;
service information corresponding to the available resource; or
logical channel identification information corresponding to the available resource.

36. The resource allocation apparatus according to claim 31, wherein when the MAC multiplexing rule comprises data of logical channels using different LCP procedures is to be multiplexed into one MAC PDU, the resource allocation apparatus further comprises one of the following:
a second allocating unit, configured to sort the logical channels that are allowed to use the available resource and have available data in a descending order of the logical channel priority, and performing a first round of resource allocation according to the priority order; when performing the first round of resource allocation, for the logical channel using the first LCP procedure, performing a resource allocation according to the first LCP procedure; for the logical channels using the second LCP procedure, allocating resources according to the PBR of the logical channels;
a second performing unit, configured to perform a first operation according to the priorities of the first LCP procedure and the second LCP procedure;
wherein the first operation comprises:
in the case where the priority of the first LCP procedure is higher than the priority of the second LCP procedure, allocating resources to the logical channels using the first LCP procedure according to the first LCP procedure preferentially; when there are remaining resources, further allocating resources to the logical channels using the second LCP procedure according to the second LCP procedure; or
in the case where the priority of the second LCP procedure is higher than the priority of the first LCP procedure, allocating resources to the logical channels using the second LCP procedure according to the second LCP procedure preferentially, performing the first round of resource allocation based on PBR in a descending order of the logical channel priority; when there are remaining resources after the first round of resource allocation, further allocating the resources to the logical channel using the first LCP procedure according to the first LCP procedure; if there are still remaining resources, further allocating the resources to the remaining data to be transmitted of the logical channel using the second LCP procedure according to the second LCP procedure; or
in the case where the priority of the second LCP procedure is higher than the priority of the first LCP procedure, allocating resources to the logical channels using the second LCP procedure, performing the first round of resource allocation and the second round of resource allocation according to the second LCP procedure; if there are remaining resources after the second round of resource allocation, allocating resources to the logical channels using the first LCP procedure according to the first LCP procedure.

37. An information configuration apparatus, applied to a network device, comprising:
a first sending unit, configured to send logical channel configuration information to a terminal device, wherein the logical channel configuration information is configured to assist the terminal device in determining a logical channel prioritization (LCP) procedure adopted by a logical channel;
wherein the LCP procedure comprises at least one of the following:
a first LCP procedure, wherein the first LCP procedure is: according to a descending order of a priority of each of packet data unit (PDU) sets having available data and allowed to use the available resource, allocating resources to the data to be transmitted of each PDU set; or
a second LCP procedure, comprising two rounds of resource allocation. The first round of resource allocation is to allocate resources to the data to be transmitted in each logical channel in turn according to the prioritized bit rate (PBR) in the descending order of logical channel priority for the logical channels having available data; if there are still remaining resources after the first round of resource allocation, the second round of resource allocation will be continued in the descending order of logical channel priority for the remaining data to be transmitted for each logical channel until the resources are exhausted or the data to be transmitted of all logical channels have obtained resources.

38. The information configuration apparatus according to claim 37, wherein the logical channel configuration information comprises LCP procedure indication information.

39. The information configuration apparatus according to claim 37, further comprising:
a second sending unit, configured to sending available resource to the terminal device, wherein the available resource carry indication information;
the indication information comprises at least one of the following:
a LCP procedure corresponding to the available resource;
service information corresponding to the available resource; or
logical channel identification information corresponding to the available resource.

40. A processor-readable storage medium, storing a computer program, wherein the computer program is configured to enable the processor to perform the method of any one of claims 1 to 10 or the method of any one of claims 11-13.
